Europäisches Patentamt

European Patent Office

Office européen des brevets

(19)

(11) Veröffentlichungsnummer: **0 191 752**
A1

(12) **EUROPÄISCHE PATENTANMELDUNG**

(21) Anmeldenummer: 86890012.7

(22) Anmeldetag: 23.01.86

(51) Int. Cl.⁴: **H 01 M 6/52, C 22 B 1/00**

(30) Priorität: 06.02.85 AT 344/85

(43) Veröffentlichungstag der Anmeldung: 20.08.86
Patentblatt 86/34

(84) Benannte Vertragsstaaten: DE FR GB IT SE

(71) Anmelder: **VOEST-ALPINE Aktiengesellschaft,
Friedrichstrasse 4, A-1011 Wien (AT)**

(72) Erfinder: **Wallner, Felix, Dipl.-Ing. Dr.,
Rosseggerstrasse 75, A-4020 Linz (AT)**
Erfinder: **Lugscheider, Walter, Dipl.-Ing. Dr.,
Biesenfeldweg 2, A-4040 Linz (AT)**
Erfinder: **Janusch, Alois, Dipl.-Ing., Leopersdorf 109,
A-8652 Kindberg (AT)**
Erfinder: **Ludewig, Fritz, Dipl.-Ing. Dr.,
Lorberaustrasse 13, A-8704 Leoben (AT)**

(74) Vertreter: **Haffner, Thomas M., Dr. et al,
Patentanwaltskanzlei Dipl.-Ing. Adolf Kretschmer Dr.
Thomas M. Haffner Schottengasse 3a, A-1014 Wien (AT)**

(54) Verfahren zur oxidativ-thermischen Vorbehandlung von galvanischen Elementen für die nachfolgende Abtrennung von Schwermetallen sowie Vorrichtung zur Durchführung dieses Verfahrens.

(57) Für die oxidativ-thermische Vorbehandlung von galvanischen Elementen für die nachfolgende Abtrennung von Schwermetallen wird vorgeschlagen, die galvanischen Elemente mit einer relativ zur stöchiometrisch erforderlichen Menge an Sauerstoff für die Verbrennung von Kunststoff- und organischen Anteilen höheren Sauerstoffmenge auf Temperaturen zwischen 450°C und 700°C zu erhitzen. Die Verbrennungsabgase werden nach dem Verlassen des gasdicht verschliessbaren Autoklaven (1) einem Kühler (2, 3) zugeführt und gereinigt. Aus dem Kühler wird Kondensat, insbesondere Hg und Sublimat, abgezogen. Aus der Gasreinigungseinrichtung (6) wird gereinigtes Abgas abgezogen und wenigstens 70 Vol.% der gereinigten Abgase werden nach Einstellen eines Sauerstoffgehaltes zwischen 15 Vol.% und 40 Vol.%, vorzugsweise zwischen 20 Vol.% und 35 Vol.%, im Kreislauf geführt und dem Autoklaven (1) neuerlich zugeführt.

Verfahren zur oxidativ-thermischen Vorbehandlung von galvanischen Elementen für die nachfolgende Abtrennung von Schwermetallen sowie Vorrichtung zur Durchführung dieses Verfahrens

Die Erfindung bezieht sich auf ein Verfahren zur oxidativ-
-thermischen Vorbehandlung von galvanischen Elementen für die
nachfolgende Abtrennung von Schwermetallen, sowie auf eine
Vorrichtung zur Durchführung dieses Verfahrens.

Derartige galvanische Elemente, insbesondere die sogenannten
Knopfzellen, enthalten eine Reihe von Schwermetallen und mehr
oder minder giftige Metalle bzw. deren Salze, wie beispielsweise Quecksilber, Kadmium, Blei und Zink. Derartige Knopfzellen werden vor allen Dingen in Taschenrechnern, Uhren,
Fotoapparaten und elektronischen Gebrauchsartikeln verwendet
und sind in erster Linie als Quecksilberoxyd/Zink-, Quecksilberoxyd/Kadmiumzellen oder Zellen mit Silberoxydelektroden
mit unterschiedlichen Dimensionierungen gebräuchlich. Mit
Rücksicht auf die Giftigkeit der in derartigen Zellen enthaltenen Schwermetalle können diese nicht ohne weiteres mit
Hausmüll gemeinsam verarbeitet werden und es werden daher
derartige Hochleistungszellen, insbesondere Knopfzellen,
gesondert gesammelt, um die teilweise wertvollen Schwermetalle rückzugewinnen.

Vor einer Aufarbeitung von deraratigen galvanischen Elementen, welche beispielsweise durch saure oder alkalische
Laugung möglich wäre, ist es zunächst erforderlich, das
Gehäuse dieser Zellen aufzuschließen. Insbesondere bei
quecksilberhaltigen Zellen besteht jedoch bei dieser Gelegenheit die Gefahr, daß Quecksilberdämpfe austreten, und es sind
daher für das Aufschließen von gebrauchten galvanischen
Elementen besondere Vorkehrungen zu treffen.

Altbatterien weisen in der Regel einen Kunststoffanteil von
ca. 2 % auf. Die Entfernung dieses Kunststoffanteiles ist durch eine oxidativ-thermische Vorbehandlung möglich, wobei allerdings bei einem derartigen Verbrennen des Kunststoffanteiles die Gefahr besteht, daß Quecksilberoxyd in größeren Mengen gebildet wird und als Sublimat in die Verbrennungsabgase übertritt. Auch elementares Quecksilber wird bei einer derartigen Verbrennung in nennenswerten Mengen in den Verbrennungsabgasen enthalten sein, so daß diese Verbrennungsabgase nicht ohne Reinigung in die Atmosphäre abgelassen werden können.

Die Erfindung zielt nun darauf ab ein Verfahren der eingangs genannten Art zu schaffen, welches eine rasche Abtrennung des Kunststoffanteiles bzw. organischer Substanzen bei möglichst geringer Umweltbelastung ermöglicht. Zur Lösung dieser Aufgabe besteht die Erfindung im wesentlichen darin, daß die galvanischen Elemente mit einer gegenüber der stöchiometrischen Menge für die Verbrennung von Kunststoff- und organischen Anteilen höheren Sauerstoffmenge auf Temperaturen zwischen 450°C und 700°C, insbesondere 550 bis 600°C, erhitzt werden, daß die Verbrennungsabgase gereinigt und gekühlt werden und die gereinigten Abgase zu wenigstens 70 Vol.% nach Einstellen eines Sauerstoffgehaltes zwischen 15 Vol.% und 40 Vol.%, vorzugsweise zwischen 20 und 35 Vol.%, im Kreislauf geführt und dem Verbrennungsraum neuerlich zugeführt werden. Dadurch, daß die galvanischen Elemente mit einer gegenüber der stöchiometrischen Menge für die Verbrennung von Kunststoff- und organischen Anteilen höheren Sauerstoffmenge auf Temperaturen zwischen 450 und 700°C erhitzt werden, wird eine verfahrensökonomisch rasche Abtrennung und Verbrennung der Kunststoff- bzw. organischen Anteile erzielt. Dadurch, daß die gereinigten Abgase zu wenigstens 70 Vol.% nach Einstellen eines Sauerstoffgehaltes zwischen 15 und 40 Vol.% im Kreislauf geführt werden, läßt sich in einfacher Weise im gesamten System ein leichter Unterdruck aufbauen, so daß ein Austreten von giftigen Dämpfen mit Sicherheit vermieden wird. Die

- 3 -

weitgehende Kreislaufführung der Abgase führt in weiterer Folge zu einem nur geringen Gasausbringen und damit auch bei unvollständiger Reinigung der Gase zu einer sehr geringen Umweltbelastung. Es hat sich herausgestellt, daß ein hoher Rückführungsanteil nur dann erreicht werden kann, wenn ein Sauerstoffgehalt zwischen 15 und 40 Vol.%, vorzugsweise ein Sauerstoffgehalt zwischen 20 und 35 Vol.%, der dem Autoklaven für die Verbrennung zuzuführenden Gase eingestellt wird. Ein Arbeiten mit zu hohen Sauerstoffgehalten ist im Vergleich zu einem Arbeiten mit Luftüberschüssen mit Nachteilen verbunden, die sich im besonderen darin ausdrücken, daß der Anteil der im Kreislauf führbaren Gase geringer wird. Innerhalb des Bereiches von 20 bis 35 Vol.% Sauerstoff für die dem Autoklaven zuzuführenden Gase ergibt sich im Bezug auf den kostenbestimmenden Reinsauerstoffeinsatz eine etwa gleichwertige Verfahrensweise. Bei gegenüber diesen Sauerstoffgehalten erhöhten Sauerstoffgehalten wird das Ausmaß, in welchem Abgas verworfen werden muß und Sauerstoff zugesetzt werden muß, überproportional größer, wodurch der Anteil der im Kreislauf geführten Verbrennungsabgase geringer wird. Eine überstöchiometrische Menge ist im Hinblick auf eine rasche Verfahrensführung von wesentlichem Vorteil und dadurch, daß der Großteil der Gase im Kreislauf geführt wird, entsteht keine zusätzliche Belastung der Umwelt durch gegebenenfalls mitgeführtes Quecksilber bzw. Quecksilberoxyd. Innerhalb der Kreislaufführung kann Quecksilber und Quecksilberoxyd nach Kühlung der Verbrennungsabgase laufend abgetrennt werden, so daß weitgehend von derartigen toxischen Substanzen befreite Gase dem Autoklaven rückgeführt werden.

Im Rahmen des erfindungsgemäßen Verfahrens hat sich als besonders vorteilhaft herausgestellt, wenn so vorgegangen wird, daß bei einem $O_2$-Gehalt der in den Verbrennungsraum einzuführenden Gase zwischen 20 und 25 Vol.% mit einem auf die Stöchiometrie der Verbrennungsreaktion des Kunststoffes bezogenen Sauerstoffüberschuß von 50 bis 100 % und bei einem

$O_2$-Gehalt von 25 bis 30 Vol.% mit einem auf die Stöchiometrie der Verbrennungsreaktion des Kunststoffes bezogenenen $O_2$-Überschuß von 30 bis 70 % gearbeitet wird. Es soll somit bei größerem Sauerstoffanteil des dem Autoklaven neuerlich zugeführten Gases ein geringerer stöchiometrischer Überschuß gebildet werden als bei sauerstoffärmeren im Kreislauf geführten Gasen. Unter Einhaltung dieser Bedingungen können in besonders vorteilhafter Weise 80 bis 95 %, insbesondere 85 bis 92 %, der Verbrennungsabgase nach Einstellung des gewünschten Sauerstoffgehaltes im Kreislauf geführt werden. Der gewünschte Sauerstoffgehalt wird mit Vorteil während des Verfahrens gleichgehalten, so daß im Autoklaven konstante Reaktivität der zugeführten Gase sichergestellt wird.

Die erfindungsgemäße Vorrichtung zur Durchführung dieses Verfahrens weist einen gasdicht verschließbaren Autoklaven mit einer Gaszuleitung und einer Gasableitung auf. Eine derartige Einrichtung kann gegenüber dem atmosphärischen Druck mit verringertem Druck betrieben werden, so daß ein unbeabsichtigtes Austreten von toxischen Gasen verhindert werden kann. Erfindungsgemäß ist die Einrichtung im wesentlichen dadurch gekennzeichnet, daß in die Gasableitung ein Kühler eingeschaltet ist, aus welchem gekühlte Verbrennungsabgase absaugbar sind, daß an den Kühler ein Sammelbehälter für Kondensat, insbesondere Hg und Sublimat, anschließbar ist, daß dem Kühler eine Gasreinigungseinrichtung nachgeschaltet ist und daß die Gasreinigungseinrichtung über ein Ventil und eine Rückführungsleitung mit einer Mischstelle für das Zumischen von Sauerstoff und dem Gaseinlaß der Autoklaven verbunden ist. Durch die Anordnung eines Kühlers können aus den Verbrennungsabgasen kondensierende toxische Substanzen abgetrennt werden, wobei eine zusätzliche weitere Reinigung in einer Gasreinigungseinrichtung vorgenommen wird. Das aus der Gasreinigungseinrichtung abgezogene Gas kann über ein Ventil und eine Rückführungsleitung mit einer Mischstelle für das Zumischen von Sauerstoff und dem Gaseinlaß des Autoklaven verbunden werden, wobei bei der bevorzugten Verfahrensführung, bei welcher der gesamte Gaskreislauf unter einem gegenüber dem atmosphärischen Druck verminderten Druck gehalten ist, die Mischstelle als Ansaugkammer für Sauerstoff ausgebildet werden kann.

In besonders bevorzugter Weise ist der Kühler zweistufig ausgebildet, wobei er in der ersten Kühlstufe mit dem rückzuführenden Gasanteil als Kühlmittel beaufschlagt ist. Auf diese Weise kann in der ersten Kühlstufe gleichzeitig mit einer Kühlung eine Aufwärmung der dem Verbrennungsraum rückzuführenden Gase vorgenommen werden. In vorteilhafter Weise ist die Gasreinigungseinrichtung als Gaswäscher ausgebildet, wobei zur Erhöhung der Effizienz das Waschwasser unter Zwischenschaltung eines Kühlers zumindest teilweise im Kreislauf geführt ist. Die Kreislaufführung des Waschwassers dient hiebei gleichfalls der Verringerung der Umweltbelastung.

Der verbleibende geringe Anteil der nichtrückgeführten Verbrennungsabgase kann dadurch weitgehend gereinigt werden, daß dieser Anteil der Verbrennungsabgase einem Tiefkühler zugeführt ist und bei Temperaturen von kleiner als $0^{o}C$, vorzugsweise kleiner als $-10^{o}C$, einem Filter, insbesondere einem Aktivkohlefilter, zugeführt ist. Nach dem Passieren des Filters können diese Anteile ohne weiteres in die Atmosphäre abgegeben werden. Wenn, wie es einer vorteilhaften Weiterbildung der erfindungsgemäßen Einrichtung entspricht, das Sauggebläse am Abzugsende des Gaswäschers angeordnet ist, läßt sich in diesem Bereich ein Druck aufbauen, welcher den freien Austritt in die Atmosphäre nach Passieren des Aktivkohlefilters sicherstellt.

Das im Tiefkühler entstehende Tauwasser kann in vorteilhafter Weise über eine Verbindungsleitung mit einem Bereich nah der Gaszuleitung des Gaswäschers verbunden sein. Auf diese Weise ergibt sich beim Eintritt der aus dem Kühler angesaugten Gase eine kurzfristige stärkere Unterkühlung, welche ein Kondensieren und Abtrennen von unerwünschten Anteilen aus den Verbrennungsabgasen begünstigt.

In der nachfolgenden Tabelle werden fünf Verfahrensvarianten 1 bis 5 vergleichend gegenübergestellt, wobei die Varianten 1 und 5 außerhalb des erfindungsgemäßen Bereiches liegen, wohingegen die Varianten 2 bis 4 die Vorteile der Erfindung demonstrieren.

Die Verfahrensvariante 1 betrifft den Fall der Verbrennung des Kunststoffanteiles mit der stöchiometrisch erforderlichen Luftmenge. Die Verfahrensvariante 2 beschreibt die Verbrennung des Kunststoffanteiles mit 50 % überschüssiger Luft oder einer gleichen Inertgas-Sauerstoffmenge mit einem Sauerstoffgehalt, welcher dem Sauerstoffgehalt von Luft entspricht. Die Verfahrensvariante 3 entspricht der Verbrennung des Kunststoffanteiles mit 100 % überschüssiger Luft oder der gleichen Inertgas-Sauerstoff-menge gleichen Sauerstoffgehaltes. Die Verfahrensvariante 4 stellt die Verbrennung des Kunststoffanteiles mit einem Inertgas-Sauerstoff-Gemisch, insbesondere einem Stickstoff-Sauerstoff--Gemisch dar, welches gegenüber Luft einen um etwa 50 % erhöhten Sauerstoffgehalt aufweist. Die Verfahrensvariante 5 schließlich betrifft das Verbrennen des Kunststoffanteiles mit einem Inertgas-Sauerstoff-Gemisch, insbesondere einem Stickstoff-Sauerstoff--Gemisch, welches im Bezug auf Luft einen 100 %igen Sauerstoffüberschuß aufweist.

0191752

| Verfahrensvariante | 1 | 2 | 3 | 4 | 5 |
|---|---|---|---|---|---|
| Knopfzellen-Bezugsmengen (kg) | 1 | 1 | 1 | 1 | 1 |
| Kunststoffanteil (berechnet als Polyäthylen) PE (%) | 2 | 2 | 2 | 2 | 2 |
| Theoretischer Sauerstoffbedarf für die vollständige Verbrennung des Kunststoffanteiles (1) | 47,94 | 47,94 | 47,94 | 47,94 | 47,94 |
| $O_2$-Gehalt des eingesetzten Oxydationsmittels bzw. der eingesetzten regenerierten $O_2$/Inertgasmischung (%) | 20,96 | 20,96 | 20,06 | 31,44 | 41,92 |
| Je kg Knopfzellen einzusetzende Oxidationsmittelmenge (1) | 228,72 | 343,08 | 457,44 | 228,72 | 228,72 |
| Auf die Verbrennungsreaktion des Kunststoffes bezogener Sauerstoffüberschuß (%) | 0 | 50 | 100 | 50 | 100 |
| $O_2$-Gehalt des Verbrennungsabgases (trocken) nach erfolgter Kunststoffverbrennung (%) | 0 | 7,3 | 10,86 | 11,26 | 22,53 |

- 8 -

0191752

| | | | | | |
|---|---|---|---|---|---|
| Insgesamte Abgasmenge (trocken) (1) | 212,74 | 327,1 | 441,46 | 212,74 | 212,74 |
| Je kg Knopfzellen zu verwerfende Abgasmenge (1) | 31,96 | 34,48 | 35,85 | 36,016 | 41,25 |
| Je kg Knopfzellen rückzuführende Abgasmenge (1) | 180,78 | 292,61 | 405,60 | 176,72 | 171,48 |
| Zu verwerfender Abgasanteil (5) | 15,02 | 10,54 | 8,12 | 16,93 | 19,39 |
| Rückzuführender Abgasanteil (Recyclierungsgrad) (%) | 84,98 | 89,45 | 91,88 | 83,07 | 80,61 |
| Zur Gasregeneration erforderlicher Sauerstoffzusatz (1/kg Knopfzellen) | 47,94 | 50,46 | 51,83 | 51,99 | 57,23 |
| $O_2$-Mehrverbrauch gegenüber dem theoretischen Verbrauch je kg Knopfzellen (absolut) (1) | 0 | 2,52 | 3,89 | 4,05 | 9,29 |
| $O_2$-Mehrverbrauch gegenüber dem theoret.Verbrauch je kg Knopfzellen (relativ) (%) | 0 | 5,25 | 8,11 | 8,44 | 19,38 |

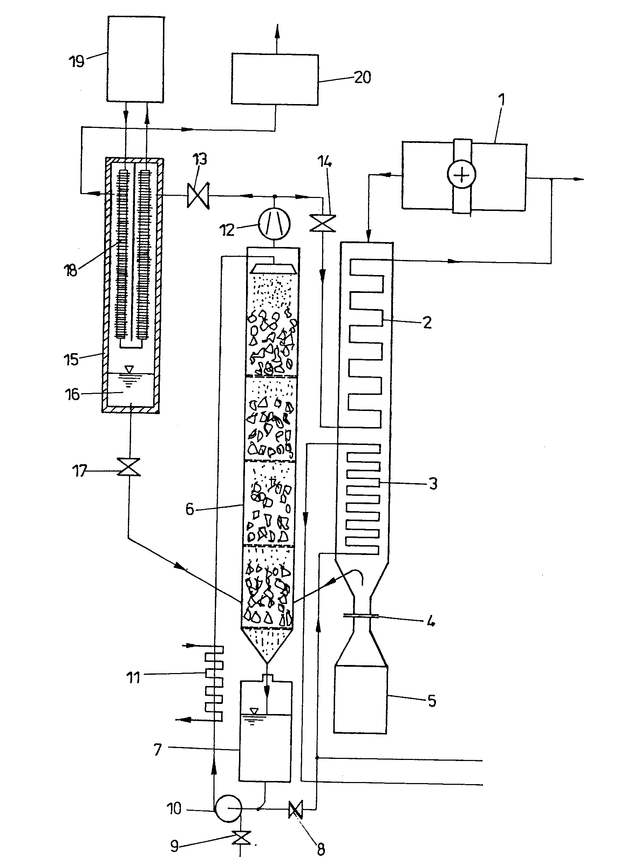

Die Erfindung wird weiters an Hand eines in der Zeichnung schematisch dargestellten Ausführungsbeispieles einer erfindungsgemäßen Einrichtung für die Durchführung des Verfahrens näher erläutert. In der Zeichnung ist mit 1 ein Autoklav bezeichnet, welcher von außen beheizt wird und welchem die galvanischen Elemente aufgegeben werden. Mit 2 ist die erste Stufe eines Kühlers bezeichnet, welchem die heißen Verbrennungsabgase zugeführt werden und welcher gleichzeitig der Aufwärmung der dem Autoklaven 1 rückzuführenden Anteile der Verbrennungsabgase dient. Die zweite Stufe des Kühlers bzw. der Nachkühler ist mit 3 bezeichnet und wird mit Wasser gespeist. Am unteren Ende des Kühlers ist ein Schieber 4 angeordnet, an welchem ein Quecksilber- bzw. Quecksilberoxydsammelbehälter 5 angeschlossen ist. Aus diesem unteren Bereich wird über eine Saugleitung Verbrennungsabgas in einen Gaswäscher 6 eingesaugt. In diesem Gaswäscher sind in mehreren Böden Formkörper, beispielsweise aus Kalziumhydroxyd, Kalziumkarbonat, Kalziumoxyd und Magnesiumoxyd enthalten, wobei die Verbrennungsabgase den Gaswäscher von unten nach oben durchströmen. Am unteren Ende des Gaswäschers 6 ist ein Gaswaschwassersammelbehälter 7 angeschlossen. Das Frischwasser für den Nachkühler 3 sowie für den Gaswäscher 6 wird bei 8 eingespeist. Der Gaswaschwasserablauf für denjenigen Anteil, welcher nicht im Kreislauf geführt werden kann, ist mit 9 bezeichnet. Das Waschwasser gelangt über eine Pumpe 10 und einen Kühler 11 in den oberen Bereich des Gaswäschers 6.

Am oberen Ende des Gaswäschers 6 wird über ein Sauggebläse 12 Abgas abgezogen, welches in der Folge an steuerbare Ventile 13 und 14 gelangt. Durch das steuerbare Ventil 14 wird der Anteil des dem Autoklaven 1 rückzuführenden Verbrennungsabgases festgelegt, wobei diese Verbrennungsabgase vor dem Eintritt in den Autoklaven 1 mit Sauerstoff vermischt werden, um den ursprünglichen Sauerstoffgehalt wiederherzustellen.

Der nicht im Kreislauf geführte Teil der Verbrennungsabgase gelangt über das Ventil 13 in einen Abgastiefkühler 15. Am Grund dieses Abgastiefkühlers 15 sammelt sich Tauwasser 16, welches über ein Ventil 17 in eine Rückführungsleitung in den unteren Bereich des Gaswäschers 6 rückgeführt wird. Die Kühlschlangen des Tiefkühlers sind mit 18 bezeichnet, wobei eine Abkühlung des Verbrennungsabgases auf Temperaturen von -20 bis -30°C angestrebt wird. Die Kältemaschine ist mit 19 bezeichnet.

Das aus dem Abgastiefkühler austretende Abgas wird einem Aktivkohlefilter 20 zugeführt, bevor es in die Atmosphäre abgelassen wird.

Dem Autoklaven 1 wird über eine Leitung 21 Sauerstoff zugeführt.

0191752

Patentansprüche:

1. Verfahren zur oxidativ-thermischen Vorbehandlung von galvanischen Elementen für die nachfolgende Abtrennung von Schwermetallen, dadurch gekennzeichnet, daß die galvanischen Elemente mit einer gegenüber der stöchiometrischen Menge für die Verbrennung von Kunststoff- und organischen Anteilen höheren Sauerstoffmenge auf Temperaturen zwischen 450$^{\circ}$C und 700$^{\circ}$C, insbesondere 550 bis 600$^{\circ}$C, erhitzt werden, daß die Verbrennungsabgase gereinigt und gekühlt werden und die gereinigten Abgase zu wenigstens 70 Vol.% nach Einstellen eines Sauerstoffgehaltes zwischen 15 Vol.% und 40 Vol.%, vorzugsweise zwischen 20 und 35 Vol.%, im Kreislauf geführt und dem Verbrennungsraum neuerlich zugeführt werden.

2. Verfahren nach Anspruch 1, dadurch gekennzeichnet, daß bei einem $O_2$-Gehalt der in den Verbrennungsraum einzuführenden Gase zwischen 20 und 25 Vol.% mit einem auf die Stöchiometrie der Verbrennungsreaktion des Kunststoffes bezogenen Sauerstoffüberschuß von 50 bis 100 % und bei einem $O_2$-Gehalt von 25 bis 30 Vol.% mit einem auf die Stöchiometrie der Verbrennungsreaktion des Kunststoffes bezogenenen $O_2$-Überschuß von 30 bis 70 % gearbeitet wird.

3. Verfahren nach Anspruch 1 oder 2, dadurch gekennzeichnet, daß 80 bis 95 %, insbesondere 85 bis 92 %, der Verbrennungsabgase nach Einstellung des gewünschten $O_2$-Gehaltes im Kreislauf geführt werden.

4. Vorrichtung zur Durchführung des Verfahrens nach einem der Ansprüche 1 bis 3 mit einem gasdicht verschließbaren Autoklaven, mit einer Gaszuleitung und einer Gasableitung, dadurch gekennzeichnet, daß in die Gasableitung ein Kühler (2, 3) eingeschaltet ist, aus welchem gekühlte Verbrennungsabgase absaugbar sind, daß an den Kühler (2, 3) ein Sammelbehälter (5) für Kondensat, insbesondere Hg und flüchtige Quecksilberverbindungen, anschließbar ist, daß dem Kühler (2, 3) eine Gasreinigungseinrichtung (6) nachgeschaltet ist und daß die Gasreinigungseinrichtung (6) über ein Ventil (14) und eine Rückführungsleitung mit einer Mischstelle für das Zumischen von Sauerstoff und dem Gaseinlaß der Autoklaven (1) verbunden ist.

5. Vorrichtung nach Anspruch 4, dadurch gekennzeichnet, daß der Kühler (2, 3) zweistufig ausgebildet ist und in der ersten Kühlstufe (2) mit dem rückzuführenden Gasanteil als Kühlmittel beaufschlagt ist.

6. Vorrichtung nach Anspruch 4 oder 5, dadurch gekennzeichnet, daß die Gasreinigungseinrichtung (6) als Gaswäscher ausgebildet ist und daß das Waschwasser unter Zwischenschaltung eines Kühlers (11) zumindest teilweise im Kreislauf geführt ist.

7. Vorrichtung nach Anspruch 4, 5 oder 6, dadurch gekennzeichnet, daß der nicht rückgeführte Anteil der Verbrennungsabgase einem Tiefkühler (15) zugeführt ist und bei Temperaturen von kleiner als $0^{\circ}C$, vorzugsweise kleiner als $-10^{\circ}C$, einem Filter (20), insbesondere einem Aktivkohlefilter, zugeführt ist.

8. Vorrichtung nach einem der Ansprüche 4 bis 7, dadurch gekennzeichnet, daß ein Sauggebläse (12) am Abzugsende des Gaswäschers (6) angeordnet ist.

9. Vorrichtung nach einem der Ansprüche 4 bis 8, dadurch gekennzeichnet, daß eine Verbindungsleitung den Tauwassersammelraum des Tiefkühlers (15) mit einem Bereich nahe der Gaszuleitung des Gaswäschers (6) verbindet.

0191752

1/1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 826 490 (A.E. NEUMANN) <br><br> --- | | H 01 M 6/52 <br> C 22 B 1/00 |
| A | EP-A-0 075 978 (SAB NIFE AB) <br><br> --- | | |
| A | EP-A-0 117 865 (VOEST-ALPINE AG) <br><br> --- | | |
| A | EP-A-0 069 117 (VOEST-ALPINE AG) <br><br> ----- | | |

RECHERCHIERTE SACHGEBIETE (Int. Cl.4)

H 01 M
C 22 B

Der vorliegende Recherchenbericht wurde für alle Patentansprüche erstellt.

| Recherchenort <br> DEN HAAG | Abschlußdatum der Recherche <br> 23-05-1986 | Prüfer <br> JACOBS J.J.E.G. |
|---|---|---|